# EUROPEAN PATENT APPLICATION

(11) **EP 4 614 008 A1**
(43) Date of publication of application: **10.09.2025**
(21) Application number: 25162064.7
(22) Date of filing: 06.03.2025
(51) Int. Cl.: F15B 1/26

(54) **HYDRAULIC TANK**

(30) Priority: 07.03.2024 GB 202403338
(71) Applicant: Terex GB Limited, Dungannon County Tyrone BT71 4DR (GB)
(72) Inventor: CRUTCHLEY, Andrew, Dungannon, BT71 4DR (GB); MARSHALL, Colin, Dungannon, BT71 4DR (GB)
(74) Representative: FRKelly

(57) **Abstract**

A hydraulic tank comprises a tank body with an internal fluid reservoir, a fluid inlet, a fluid outlet and a fluid flow path from the fluid inlet to the fluid outlet through the reservoir. The tank body comprises a plurality of fluid chambers providing the fluid reservoir, the tank being configurable to selectively include or exclude at least one of the fluid chambers from the fluid flow path. The tank is configurable between at least two different configurations in which a respective different number of fluid chambers are included in the fluid flow path thereby adjusting the fluid capacity of the reservoir, thereby allowing the tank to be adapted for use with hydraulic systems with different flow demands.

## Description

### FIELD OF THE INVENTION

This invention relates to hydraulic tanks and to hydraulic systems that include hydraulic tanks.

### BACKGROUND TO THE INVENTION

Hydraulic systems typically include a hydraulic tank that serves as a reservoir for hydraulic fluid and which supplies the hydraulic fluid to a hydraulic circuit and/or hydraulic components. In addition to providing a reservoir of hydraulic fluid, the hydraulic tank may perform other functions including dissipating heat from the hydraulic fluid, allowing contaminants to settle so that they can be separated from the hydraulic fluid, and removing air that has been trapped or absorbed by the hydraulic fluid.

For reasons of efficiency and performance, it is desirable that the hydraulic tank is of a size that suits the hydraulic system with which it is to be used. The optimal size may depend on a number of aspects of the hydraulic system including hydraulic flow rate.

However, in some applications it is convenient or necessary (e.g. as a result of spatial requirements) to use the same hydraulic tank in systems that have different hydraulic requirements. For example, in the field of material, or aggregate, processing, different types of screening machines with different hydraulic requirements (typically leading to different hydraulic flow rates) tend to use the same hydraulic tank because it is required to fit into a particular space on the machine and/or to interface with other component(s) at particular locations. Moreover, with regard to manufacturing it is more cost effective to make tanks of a uniform size. Not only can this lead to poor efficiency and performance but it also results in instances in which more hydraulic fluid (which is typically hydraulic oil) being used than is necessary, which is costly and environmentally unfriendly.

It would be desirable to mitigate the problems outlined above.

### SUMMARY OF THE INVENTION

From a first aspect, the invention provides a hydraulic tank comprising: a tank body providing an internal fluid reservoir; a fluid inlet to the reservoir; and a fluid outlet from the reservoir, wherein the tank body provides a fluid flow path from the fluid inlet to the fluid outlet through the reservoir, and wherein the tank body comprises a plurality of fluid chambers for providing the fluid reservoir, the tank being configurable to selectively include or exclude at least one of the fluid chambers from the fluid flow path.

The fluid chambers (or one or more of them) may be defined by one or more internal chamber walls within the tank body, the chamber walls typically being rigid, substantially rigid or semi-rigid. For example the internal chamber walls may be formed from metal (e.g. steel or aluminium), plastics (e.g. polyethylene), or a composite material.

Each fluid chamber may be in fluid communication with one or more other fluid chamber by any suitable fluid communication means, e.g. a respective aperture or a respective conduit (e.g. a hose or pipe). Otherwise, the configuration is such that the fluid chambers are in fluid isolation from each other. The fluid communication means may be selectively enabled or disabled to allow or prevent, respectively, fluid communication between the respective fluid chambers. The fluid communication means may be internal of the tank body or external to the tank body. For example, the fluid communication means may comprise one or more aperture formed in one or more chamber wall between two or more fluid chambers, and/or one or more conduit (optionally removable conduit(s)) connecting two or more fluid chambers internally of the tank body. Alternatively, or in addition, the fluid communication means may comprise one or more conduit (optionally removable conduit(s)) connecting two or more fluid chambers externally of the tank body. To facilitate external interconnection between fluid chambers, the respective fluid chambers may include one or more fluid port that allows, or is configurable to allow, fluid communication between the respective fluid chamber and the external environment. Each fluid port may be configurable between open and closed states by any convenient means, e.g. a removable cap or a valve that can be opened or closed.

In preferred embodiments, in at least one configuration, the fluid flow path is provided by a plurality of the fluid chambers that are in fluid communication with each other such that, in use, hydraulic fluid is able to enter the tank via the fluid inlet and flow through the plurality of fluid chambers (i.e. the chambers that are in fluid communication with each other) to the fluid outlet. Preferably, the arrangement is such that the fluid flow path is meandering between the fluid inlet and the fluid outlet. To this end, at least some of the chamber walls may be disposed perpendicularly or obliquely with respect to a notional direct line between the fluid inlet and the fluid outlet and/or the fluid interconnection(s) (e.g. aperture(s) or conduit(s)) between the fluid chambers may be located with respect to each other in a manner that creates a meandering fluid flow path.

The preferred arrangement is such that the fluid flow path passes through the fluid chambers in sequence from the fluid inlet to the fluid outlet, preferably passing through each chamber only once.

The tank may be configured to exclude one or more of the fluid chambers from the fluid flow path by isolating the relevant fluid chamber(s) from the, or each, other fluid chamber that is included in the fluid flow path. In particular, the, or each, excluded fluid chamber may be isolated such that fluid cannot flow into or out of the excluded fluid chamber from or to the, or each, other fluid chamber included in the fluid flow path. The excluded fluid chamber may be isolated by means for disabling, preferably reversibly disabling, the fluid communication between the excluded fluid chamber and the, or each, other fluid chamber with which it is otherwise connected by the fluid communication means. The disabling means may comprise means for closing or blocking the respective aperture(s) or respective conduit(s), e.g. a cover such as a plate, hatch or cap, and/or a valve that is operable to prevent fluid flow between the respective chambers. Alternatively, the conduit(s) may be removed to prevent fluid flow between the respective fluid chambers, in which case it is preferred that the port(s) to which the conduit(s) are connectable to facilitate fluid flow between the respective fluid chambers are closed by any suitable means, e.g. a cap or valve(s). Fluid tight seal(s) may be provided as required to prevent unwanted fluid flow between fluid chambers.

Advantageously, isolation of the excluded fluid chamber(s) is reversible such that the excluded fluid chamber(s) may be included in the fluid flow path. To this end, the disabling means may be removable or openable as applicable, e.g. the respective cover may be removable (e.g. being held in place by any suitable releasable faster(s)) or openable, or the respective valve may be openable. Alternatively, the conduit(s) may be fitted to allow fluid flow between the respective fluid chambers. The respective port(s) to which the conduit(s) are connectable to facilitate fluid flow between the respective fluid chambers are opened, e.g. by removing the cap or opening the valve(s).

In preferred embodiments, one or more maintenance hatch is provided in the tank body to allow, when open, access to the disabling means within the fluid chambers. When the reservoir is empty, a user may open the maintenance hatch and configure or reconfigure the disabling means in the desired manner.

In preferred embodiments, the tank is configurable between a full capacity configuration in which all of the fluid chambers are included in the fluid flow path, and one or more reduced capacity configuration in which at least one of the fluid chambers is excluded from the fluid flow path. In the full capacity configuration, the fluid reservoir is capable of holding a higher volume of hydraulic fluid (typically hydraulic oil) than it is capable of holding in the reduced capacity configuration. More generally, the tank is advantageously configurable between at least two different configurations in which a respective different number of fluid chambers are included in the fluid flow path thereby adjusting the fluid capacity of the reservoir, and so adjusting the volume of fluid that the reservoir is capable of holding. The tank may be configured between different configurations by selectively including or excluding one or more of the fluid chambers from the fluid flow path. The fluid capacity may be increased by adding one or more fluid chamber to the flow path, or may be reduced by excluding, or isolating, one or more fluid chamber from the flow path.

In preferred embodiments, the fluid chambers comprise an inlet fluid chamber associated with the fluid inlet, an outlet fluid chamber associated with the fluid outlet, and at least one intermediate fluid chamber, wherein the inlet fluid chamber and the outlet fluid chamber each forms a respective part of the fluid flow path, and wherein the tank is configurable to selectively include the or each intermediate chamber in the fluid flow path or exclude the or each intermediate fluid chamber from the fluid flow path.

In preferred embodiments, each fluid chamber (or one or more of them) is provided by a respective chamber module, e.g. a respective individual container or receptacle, the chamber modules being connected together to form the tank body, or part of the tank body. This arrangement facilitates providing fluid isolation between the fluid chambers (other than the fluid communication that is provided by the fluid communication means as applicable). The chamber modules are typically formed separately from each other. The chamber modules may be connected together by any suitable means, for example by welding and/or fixings such as screws, rivets or the like. In such embodiments, the wall between any two fluid chambers may be a double wall, i.e. comprising a first wall leaf of one chamber module and a second wall leaf from the other chamber module. Accordingly, the respective fluid communication means, e.g. aperture and/or conduit, between the fluid chambers extends through each wall leaf. Fluid tight seal(s) may be provided around the fluid communication means as required to prevent fluid leakage between the wall leaves.

In alternative embodiments, at least one of and optionally all of the fluid chambers may be formed by one or more partition, e.g. baffle, located inside the tank body, the partition(s) being arranged to serve as internal chamber wall(s). In such embodiments, the tank body typically also provides chamber wall(s) for one or more of the fluid chambers. The partition(s) may be formed from any suitable material, e.g. metal, plastics or composite material, and serve as a barrier for preventing fluid flow between fluid chambers. The partition(s) may be sealed around their periphery by any suitable fluid tight seal, for example by welding to the tank body.

Advantageously, tanks embodying the invention have an external shape and configuration that is suitable for incorporation into different types of hydraulic system, or different types of machine that include a hydraulic system (e.g. screening machines or other material processing machines such as crushers, washers, separators and so on), but are configurable to adjust the internal volume of the fluid reservoir to suit the system/machine. When the tank is configured to have a reduced internal volume, the amount of oil required by the hydraulic system is reduced, which not only is cost-saving but is also more environmentally friendly.

Preferred embodiments provide a hydraulic tank of fixed external proportions and volume (or having fixed external shape and configuration, particularly the tank body), that is configurable to change the internal volume of the tank, thereby allowing the tank to be adapted for use with machines (or more generally hydraulic systems, or machines with hydraulic systems) with different flow demands, and to allow the tank to be filled with an amount of hydraulic fluid (typically hydraulic oil) that is suited to the required flow demand. Advantageously, the tank's ancillary components (e.g. filter(s), strainer(s), filler cap(s), breather(s), access hatch(es) and/or external connector(s) (as applicable)) remain fully functional regardless of the internal configuration of the tank. Advantageously, irrespective of the internal configuration of the tank, the tank maintains its functions as a reservoir to hold the oil for sufficient time to allow air to be released from the oil, for solid particles to settle to the bottom of the tank or to be captured either by the return filter or the suction strainer, to dissipate heat allow for expansion of oil within the system and to store the oil.

In preferred embodiments, the tank comprises a plurality of fluid chambers for providing a hydraulic fluid reservoir, at least one of which is configurable such that it is either in fluid communication with at least one other chamber, or in fluid isolation from said at least one other chamber. By selectively inter-connecting or isolating the relevant chamber(s), the internal volume, and therefore the capacity, of the tank (and more particularly of the fluid reservoir) is adjusted. As such, the reservoir's working oil-filled volume is adjustable.

Optionally, one or more inflatable bladder, and/or other object (which may be of fixed size), may be removably located in the tank, e.g. in one or more of the fluid chambers, in order to reduce the internal volume of the tank (by acting as a void filler).

In preferred embodiments, the flow path from the tank inlet to the tank outlet is determined by the configuration of the interconnection(s) between the chambers, wherein multiple different configurations may be adopted. Depending on the selected configuration, the hydraulic fluid may flow through all of the chambers, or one or more of the chambers may be excluded from the fluid flow path. In this way, the effective internal volume of the tank can be adjusted (reduced or increased) to match the flow demand.

Optionally, chambers may be selectably interconnected with or isolated from each other (i.e. to allow or prevent, respectively, fluid communication between the chambers) by one or more external connector and/or by one or more internal connector. Conveniently the tank may include one or more maintenance hatch for accessing the internal connector(s).

From another aspect the invention provides a hydraulic system comprising the hydraulic tank of the first aspect of the invention. The hydraulic system typically comprises at least one hydraulically operated component (e.g. one or more instance of any one or more of: a motor, a drive, an actuator, a pump, and/or a valve) to which the hydraulic tank is connected, typically as part of a hydraulic circuit, in order to supply hydraulic fluid to the hydraulically operated component(s).

Other advantageous aspects of the invention will be apparent to those ordinarily skilled in the art upon review of the following description of specific embodiments and with reference to the accompanying drawings.

### BRIEF DESCRIPTION OF THE DRAWINGS

Embodiments of the invention are now described with reference to the drawings in which like numerals are used to denote like parts and in which:
Figure 1 is a perspective view of a first embodiment of a hydraulic tank according to the present invention;
Figure 2 is a plan view of the hydraulic tank of Figure 1;
Figure 3 is a transparent perspective view of the hydraulic tank of Figure 1 with the tank being in a first configuration corresponding to a full capacity;
Figure 4 is a transparent plan view of the hydraulic tank of Figure 1 in the first configuration of Figure 3;
Figure 5 is a transparent perspective view of the hydraulic tank of Figure 1 with the tank being in a second configuration corresponding to a reduced capacity;
Figure 6 is a transparent plan view of the hydraulic tank of Figure 1 in the second configuration of Figure 5;
Figure 7 is a perspective view of a second embodiment of a hydraulic tank according to the present invention, the tank being in a first configuration corresponding to a full capacity;
Figure 8 is a plan view of the hydraulic tank of Figure 7 in the first configuration;
Figure 9 is a perspective view of the hydraulic tank of Figure 7 with the tank being in a second configuration corresponding to a reduced capacity;
Figure 10 is a plan view of the hydraulic tank of Figure 7 in the second configuration of Figure 9;
Figure 11 is a sectioned plan view of a third embodiment of a hydraulic tank according to the invention, the tank being in a first configuration corresponding to a full capacity;
Figure 12 is a sectioned plan view of the hydraulic tank of Figure 11, the tank being in a second configuration corresponding to a reduced capacity;
Figure 13 is a sectioned plan view of a fourth embodiment of a hydraulic tank according to the invention, the tank being in a first configuration corresponding to a full capacity; and
Figure 14 is a sectioned plan view of the hydraulic tank of Figure 13, the tank being in a second configuration corresponding to a reduced capacity.

### DETAILED DESCRIPTION OF THE DRAWINGS

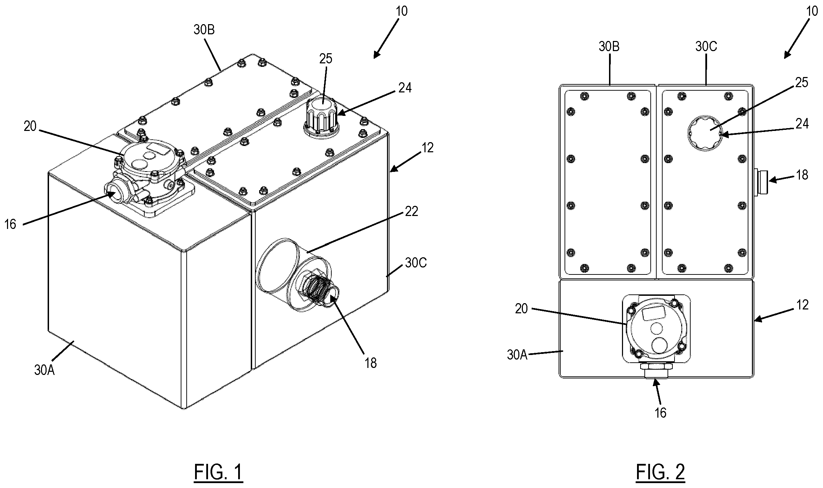

Referring now in particular to Figures 1 to 6 of the drawings there is shown, generally indicated as 10, a hydraulic tank embodying the invention. The hydraulic tank 10 is suitable for, and typically adapted for, use in a hydraulic system (not shown) in which it is connected to one or more hydraulically operated components, e.g. motor(s), actuator(s), pump(s), valve(s), drive(s) and the like, typically as part of a hydraulic circuit which may be open or closed. For example, the hydraulic tank 10 may be included in the hydraulic system of a material processing apparatus (not shown) that is configured to perform any one or more of a plurality of processes, such as feeding, conveying, screening, separating, crushing, breaking, recycling, shredding, demolition and/or washing, on one or more types of aggregate or other material, for example rocks, stones, gravel, sand and/or soil, or any other material, especially but not exclusively, material that is quarried, mined, excavated or requires breaking, recycling or sorting. To this end, the material processing apparatus typically includes one or more material processing unit configured to perform one or more of the foregoing processes as applicable. The material processing unit(s) and/or ancillary components such as conveyor(s) and feeder(s) may be hydraulically powered by the hydraulic system, for example by hydraulic motor(s), pump(s), actuator(s) or drive(s).

In use, the tank 10 is filled with hydraulic fluid, typically hydraulic oil, and as such may be referred to as a hydraulic tank. As such, the tank 10 provides a reservoir of hydraulic fluid for the hydraulic system, and may supply hydraulic fluid to and/or receive hydraulic fluid from the hydraulic system as required and depending on the application. Typically, the tank 10 is configured to provide various functions, including any one or more of: holding the hydraulic fluid for sufficient time to allow air to be released from the fluid, for solid particles to settle to the bottom of the tank; to filter and/or strain the fluid to remove contaminants; to dissipate heat allow for expansion of hydraulic fluid; and to store the hydraulic fluid.

The hydraulic tank 10 comprises a tank body 12 that provides an internal fluid reservoir 14 for hydraulic fluid. The tank 10 has a fluid inlet 16 by which hydraulic fluid may enter the reservoir 14, e.g. from a hydraulic fluid source or from a return part of a hydraulic circuit. The tank 10 has a fluid outlet 18 by which hydraulic fluid may exit the reservoir 14, e.g. to one or more hydraulic components and/or to a hydraulic circuit. The fluid inlet 16 may include a filter 20 for removing contaminants from fluid received by the tank 10. The fluid outlet 18 may include a strainer 22 for removing contaminants from fluid leaving the tank 10. The tank 10 may include at least one other fluid port 24, which may serve as an inlet for filling or topping up the reservoir 14 with hydraulic fluid and/or as a breathing port and/or as a drain. The fluid port 24 may be opened and closed by a cap 25 or other suitable closure device. One or more separate drainage port (not shown) may be provided to drain fluid from the reservoir.

The tank body 12 may be rigid, substantially rigid or semi-rigid. For example the tank body 12 may be formed from metal (e.g. steel or aluminium), plastics (e.g. polyethylene), or a composite material. The illustrated tank body 12 is cuboid in shape but it may take any other shape (and size) to suit the application. In preferred embodiments, the tank body 12 is shaped and sized to fit into a dedicated space provided on a material processing apparatus or other machine.

The tank body 12 is configured to provide a fluid flow path from the fluid inlet 16 to the fluid outlet 18 through the reservoir 14. The tank body 12 comprises a plurality of fluid chambers 30 for providing the fluid reservoir 14. The tank 10 is configurable to selectively include or exclude at least one of the fluid chambers 30 from the fluid flow path. In the embodiment of Figures 1 to 6, the tank body 12 has an inlet fluid chamber 30A, an outlet fluid chamber 30C and an intermediate fluid chamber 30B. The fluid inlet 16 is arranged to provide fluid into the inlet fluid chamber 30A. The fluid outlet 18 is arranged to output fluid from the outlet fluid chamber 30A. In preferred embodiments the inlet fluid chamber 30A and the outlet fluid chamber 30C each forms a respective part of the fluid flow path, typically irrespective of the configuration of the tank 10. As is described in more detail below, the tank 10 is configurable to selectively include the intermediate chamber 30B in the fluid flow path or exclude the intermediate fluid chamber 30B from the fluid flow path. When the intermediate fluid chamber 30B is included in the fluid flow path, it is included between the inlet fluid chamber 30A and the outlet fluid chamber 30C such that fluid flows from the inlet fluid chamber 30A to the intermediate fluid chamber 30B and from the intermediate fluid chamber 30B to the outlet fluid chamber 30C. When the intermediate fluid chamber 30B is excluded, or isolated, from the fluid flow path fluid flows from the inlet fluid chamber 30A to outlet fluid chamber 30C bypassing the intermediate fluid chamber 30B. In alternative embodiments there may be more than one intermediate fluid chamber.

The fluid chambers 30 are defined by one or more internal chamber walls 32 within the tank body 12. The chamber walls 32 may be rigid, substantially rigid or semi-rigid. For example the internal chamber walls 32 may be formed from metal (e.g. steel or aluminium), plastics (e.g. polyethylene), or a composite material.

In preferred embodiments, each fluid chamber 30 is provided by a respective chamber module, e.g. a respective individual fluid container or receptacle. The chamber modules may be rigid, substantially rigid or semi-rigid. For example the chamber modules may be formed from metal (e.g. steel or aluminium), plastics (e.g. polyethylene), or a composite material. In the embodiment of Figure 1 to 6, each of the fluid chambers 30A, 30B, 30C is provided by a respective chamber module, each of which by way of example is cuboid in shape. The chamber modules are formed separately from each other and assembled, or connected together, to form the tank body 12. This arrangement facilitates providing fluid isolation between the fluid chambers 30 since each fluid chamber 30 is formed as an individual container or receptacle with its own walls for retaining fluid. Preferably, each chamber module is regularly shaped to facilitate fitting them together to form the tank body 12. The chamber modules may be connected together by any suitable means, for example by welding and/or fixings such as screws, rivets or the like. In such embodiments, the chamber wall 32 between any two fluid chambers 30 may be a double wall, i.e. comprising a first wall leaf of one chamber module and a second wall leaf from the other chamber module, but may alternatively be a single wall, or single-leaf wall. For example, the chamber wall 32 between any two of the fluid chambers 30A, 30B or 30C may comprise a double wall consisting of two wall leaves, or a single-leaf wall. In some embodiments (not illustrated) one or more of the chambers 30 may be provided by a respective chamber module, while one or more other chamber 30 may be provided by a single internal wall.

In preferred embodiments, each fluid chamber 30 has a respective fluid port 24 for breathing and/or filling, and/or a respective drainage port. The respective port 24 may take any suitable form depending on its function(s), e.g. comprising an outlet aperture with lid or cap, a valve and/or a filter. The breathability of a hydraulic tank or chamber refers to the ability of air to flow in and out of the tank as oil volume changes. By allowing each chamber the ability to breath by means of a breather filter or other means (e.g. internally connected breather channels) pressure changes that can be damaging to the tank or chamber are avoided or at least reduced. Ancillary components (e.g. the port 24 with cap 25) may allow suitable air flow into and out of one or more of the fluid chambers 30 (i.e. the chamber 30C on which it is provided and any other chamber in fluid communication with the chamber 30C). In some embodiments, one or more of the fluid chambers (e.g. chamber 30B in the illustrated embodiment) may be in fluid isolation from such components, i.e. when isolated from the fluid flow path. In preferred embodiments the, or each, such isolatable fluid chamber is provided with its own breathing means (e.g. valve, filter, aperture etc.).

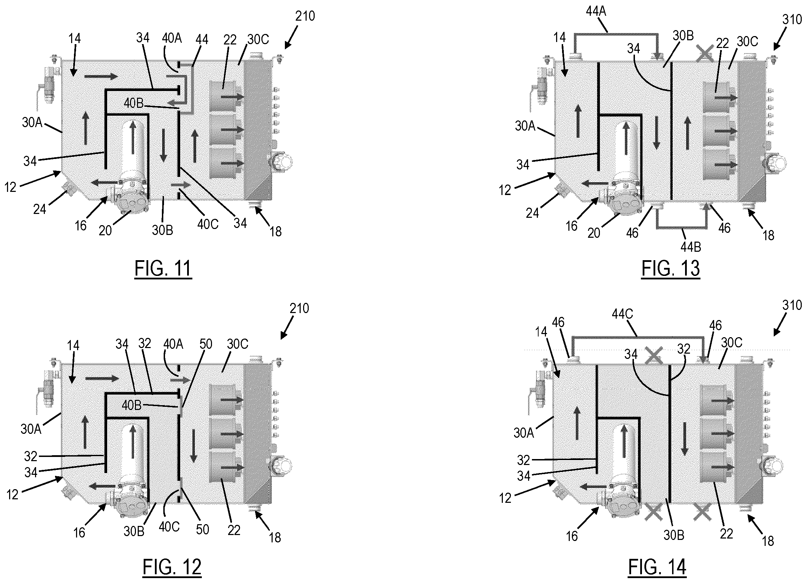

Figures 11 and 12 and Figures 13 and 14 show respective hydraulic tanks 210, 310 embodying the invention in respect of which the same or similar description applies as is provided in relation to the embodiment of Figures 1 to 6 unless otherwise indicated. In these embodiments, the fluid chambers 30 may be formed by one or more partition 34, e.g. baffle, located inside the tank body 12 to provide the internal chamber walls 32. In such embodiments, the tank body 12 typically also provides one or more chamber walls 32, in particular an external wall, for one or more of the fluid chambers 30. Each partition 34 may be formed from any suitable material, e.g. metal, plastics or composite material, and serves as a barrier for preventing fluid flow between fluid chambers 30. Each partition 34 may be sealed around its periphery by any suitable fluid tight seal, for example by welding to the tank body 12.

Each fluid chamber 30 is in fluid communication with, or configurable to be in fluid communication with, one or more of the other fluid chamber(s) 30 by any suitable fluid communication means, e.g. a respective aperture(s) or a respective conduit(s) (e.g. a hose or pipe). Otherwise, the configuration is such that the fluid chambers 30 are in fluid isolation from each other, i.e. the only way for fluid to flow from one fluid chamber 30 to another is via the respective fluid communication means. The fluid communication means may be selectively enabled or disabled to allow or prevent, respectively, fluid communication between the respective fluid chambers 30. The fluid communication means may be internal of the tank body 12 or external to the tank body 12.

For example, in the embodiment of Figures 1 to 6 the fluid communication means comprises a respective aperture 40 formed in the respective internal chamber wall 32 between respective fluid chambers 30. In particular, an aperture 40A is provided in the chamber wall 32 between the inlet fluid chamber 30A and the outlet fluid chamber 30C, an aperture 40B is provided in the chamber wall 32 between the inlet fluid chamber 30A and the intermediate fluid chamber 30B, and an aperture 40C is provided in the chamber wall 32 between the intermediate fluid chamber 30B and the outlet fluid chamber 30C. In this example, the apertures 40A, 40B, 40C extend through each wall leaf of the respective chamber wall 32. Fluid tight seal(s) may be provided around the apertures as required to prevent fluid leakage between the wall leaves.

In the embodiment of Figures 11 and 12 the fluid communication means comprises an aperture 40A provided in the chamber wall 32 between the inlet fluid chamber 30A and the outlet fluid chamber 30C, and an aperture 40C provided in the chamber wall 32 between the intermediate fluid chamber 30B and the outlet fluid chamber 30C. An aperture 40B is provided in the chamber wall 32 between the outlet fluid chamber 30C and the intermediate fluid chamber 30B which, in conjunction with a removable conduit 44 and the aperture 40A, provides the fluid communication means between the inlet fluid chamber 30A and the intermediate fluid chamber 30B when required (as shown in Figure 11).

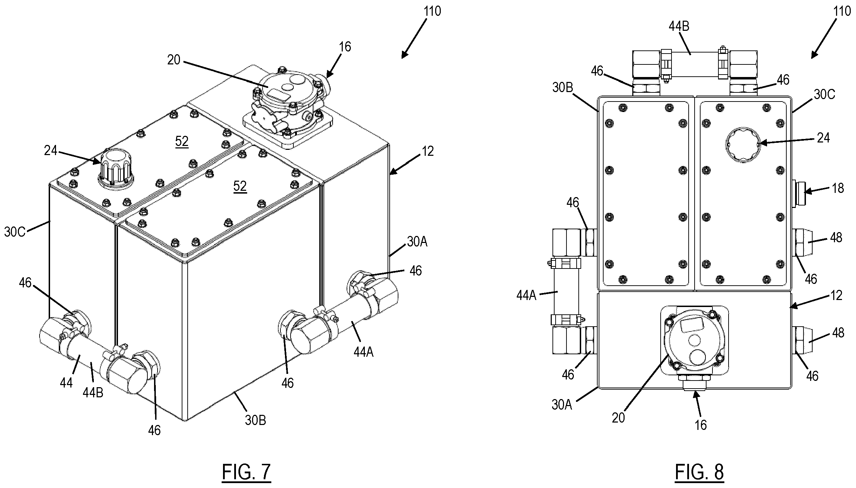

Alternatively, or in addition, the fluid communication means may comprise one or more conduit (optionally removable conduit(s)), such as a hose or pipe, connecting two or more of the fluid chambers 30 externally of the tank body 12. Figures 7 to 10 show a hydraulic tank 110 embodying the invention in respect of which the same or similar description applies as is provided in relation to the embodiment of Figures 1 to 6 unless otherwise indicated. The tank 110 includes conduits 44 located externally of the tank body 12 for providing fluid communication between fluid chambers 30. In particular, Figure 7 shows a configuration of the tank 110 in which a conduit 44A is connected between the inlet fluid chamber 30A and the intermediate fluid chamber 30B, and a conduit 44B connected between the intermediate fluid chamber 30B and the outlet fluid chamber 30C. Figure 8 shows a configuration of the tank 110 in which a conduit 44C is connected between the inlet fluid chamber 30A and the outlet fluid chamber 30B. Similarly, Figure 13 shows a configuration of the tank 310 in which a conduit 44A is connected between the inlet fluid chamber 30A and the intermediate fluid chamber 30B, and a conduit 44B connected between the intermediate fluid chamber 30B and the outlet fluid chamber 30C. Figure 14 shows a configuration of the tank 310 in which a conduit 44C is connected between the inlet fluid chamber 30A and the outlet fluid chamber 30B.

To facilitate external interconnection between fluid chambers 30, the fluid chambers 30 may include one or more fluid port 46 that allows, or is configurable to allow, fluid communication between the respective fluid chamber 30 and the external environment. Each fluid port 46 may be configurable between open and closed states by any convenient means, e.g. a removable cap 48 or a valve (not illustrated) or other suitable closure device, that can be opened or closed. In the embodiments of Figures 7 to 10 and 13 to 14, each conduit 44 is removable. When the conduit 44 is connected between the respective ports 46, the ports 46 are open to allow fluid communication between the respective fluid chambers 30 via the conduit 44. In the illustrated embodiment this involves removing the respective cap 48 from the port 46 but alternatively may involve opening a respective valve associated with the port 46. When the conduit 44 is not connected between the respective ports 46, the ports 46 are closed to prevent fluid communication between the respective fluid chambers 30. In the illustrated embodiment this involves fitting the respective cap 48 to the port 46 but alternatively may involve closing a respective valve associated with the port 46. In alternative embodiments, the conduits 44 need not be removable and fluid communication between the respective fluid chambers 30 may enabled or disabled by one or more valve (not shown) provided at one or both of the ports 46 and/or within the conduit 44.

In preferred embodiments, in at least one configuration of the tank 10, 110, 210, 310, the fluid flow path is provided by a plurality of the fluid chambers 30 that are in fluid communication with each other such that, in use, hydraulic fluid is able to enter the tank via the fluid inlet 16 and flow through the plurality of fluid chambers 30 (i.e. the chambers 30 that are in fluid communication with each other) to the fluid outlet 18. Optionally, the arrangement is such that the fluid flow path is meandering between the fluid inlet 16 and the fluid outlet 18 (as shown for example in Figure 11). Preferably, one or more of the chamber walls 32 are disposed perpendicularly or obliquely with respect to a notional direct line between the fluid inlet 16 and the fluid outlet 18. The fluid interconnection(s) (e.g. aperture(s) or conduit(s)) between the fluid chambers 30 may be located with respect to each other in a manner that creates a meandering fluid flow path.

In preferred embodiments, the arrangement is such that the fluid flow path passes through the respective fluid chambers 30 in sequence from the fluid inlet 16 to the fluid outlet 18, preferably passing through each fluid chamber 30 that is included in the fluid flow path only once.

In at least one configuration, the tank 10, 110, 210, 310 is configured to exclude one or more of the fluid chambers 30 from the fluid flow path by isolating the relevant fluid chamber(s) 30 from the, or each, other fluid chamber 30 that is included in the fluid flow path. Preferably the, or each, excluded fluid chamber 30 is isolated such that fluid cannot flow into or out of the excluded fluid chamber 30 from or to the, or each, other fluid chamber 30 included in the fluid flow path.

The excluded fluid chamber 30 may be isolated by any suitable means for disabling, preferably reversibly disabling, the fluid communication between the excluded fluid chamber 30 and the, or each, other fluid chamber 30 with which it is otherwise capable of being in fluid communication with. The disabling means may comprise means for closing or blocking the respective aperture(s) 40 or respective conduit(s) 44. For example, in the embodiments of Figures 1 to 6, a respective removable cover 50 e.g. comprising a plate, is provided for closing or blocking each aperture 40 as required. Similarly, in the embodiment of Figures 11 and 12, a respective cover 50 e.g. comprising a plate, is provided for closing or blocking apertures 40B and 40C as required. Alternatively or in addition, the disabling means may comprise one or more respective valve that is operable to prevent fluid flow between the respective chambers 30. Alternatively, or in addition, the conduit(s) 44 may be removed to prevent fluid flow between the respective fluid chambers 30. In such cases, it is preferred that the port(s) 46 (or apertures, as applicable) to which the conduit(s) 44 are connectable to facilitate fluid flow between the respective fluid chambers 30 are closed by any suitable disabling means, e.g. a cap 48, a cover 50 or valve(s). Fluid tight seal(s) may be provided as required to prevent unwanted fluid flow between fluid chambers.

Advantageously, isolation of the excluded fluid chamber(s) 30 is reversible such that the excluded fluid chamber(s) 30 may be included in the fluid flow path. To this end, the disabling means may be removable or openable as applicable, e.g. the respective cover 50 may be removable (e.g. being held in place by any suitable releasable faster(s)) 54 or may be openable, or the respective valve may be openable. Alternatively, the conduit(s) 44 may be fitted to allow fluid flow between the respective fluid chambers 30. The respective port(s) 46 to which the conduit(s) 44 are connectable to facilitate fluid flow between the respective fluid chambers 30 are opened, e.g. by removing the cap 48 or opening the valve(s).

In preferred embodiments, one or more maintenance hatch 52 is provided in the tank body 12 to allow, when open, access to the disabling means within the fluid chambers 30. Preferably, a respective maintenance hatch 52 is provided for each fluid chamber 30. When the reservoir 14 is empty, a user may open the maintenance hatch 52 and configure or reconfigure the disabling means in the desired manner.

In preferred embodiments, the tank 10, 110, 210, 310 is configurable between a full capacity configuration in which all of the fluid chambers 30 are included in the fluid flow path, and one or more reduced capacity configuration in which at least one of the fluid chambers 30 is excluded from the fluid flow path. Typically, the tank 10, 110, 210, 310 is configured in the desired manner, e.g. in the full capacity configuration or in a reduced capacity configuration, prior to use and to suit the hydraulic requirements of hydraulic system in which it is to be used. The tank 10, 110, 210, 310 may subsequently be reconfigured to suit a hydraulic system with different requirements.

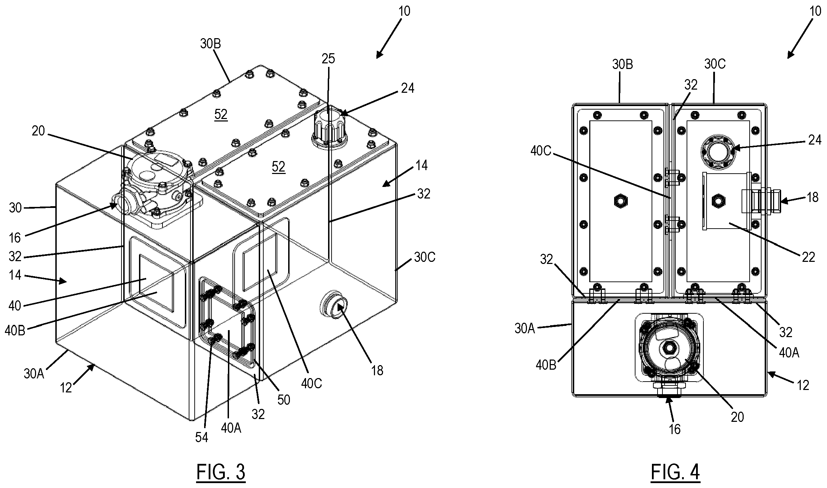

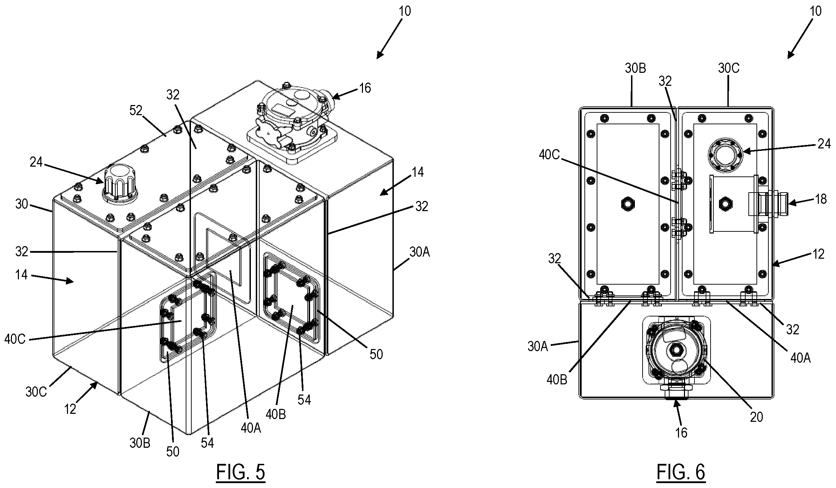

For example, Figures 3 and 4 show tank 10 in a full, or maximum, capacity configuration in which all of the fluid chambers 30A, 30B, 30C are included in the fluid flow path. In this configuration, aperture 40A is closed (by cover 50 in this example) and the apertures 40B and 40C are open to create a fluid flow path from the fluid inlet 16 through the inlet fluid chamber 30A into the intermediate fluid chamber 30B via aperture 40B, and from the intermediate fluid chamber 30B into the outlet fluid chamber 30C via aperture 40C and so to the fluid outlet 18. Accordingly, in use all of the chambers 30A, 30B, 30C may be filled with hydraulic fluid, which maximizes the capacity of the reservoir 14. In contrast, Figures 5 and 6 show tank 10 in a reduced capacity configuration in which only the inlet and outlet fluid chambers 30A, 30C are included in the fluid flow path. In this configuration, aperture 40A is open (by removing cover 50 in this example) to create a fluid flow path from the fluid inlet 16 through the inlet fluid chamber 30A into the outlet fluid chamber 30C via aperture 40A and so to the fluid outlet 18. Apertures 40B and 40C are closed (by a respective cover 50) to prevent fluid from flowing into the intermediate fluid chamber 30B from either of the other chambers 30A, 30C. As such the intermediate fluid chamber 30B is isolated from the other fluid chambers 30A, 30C and is excluded from the fluid flow path. Accordingly, in use only chambers 30A and 30C may be filled with hydraulic fluid, which reduces the capacity of the reservoir 14 in comparison with the full capacity configuration.

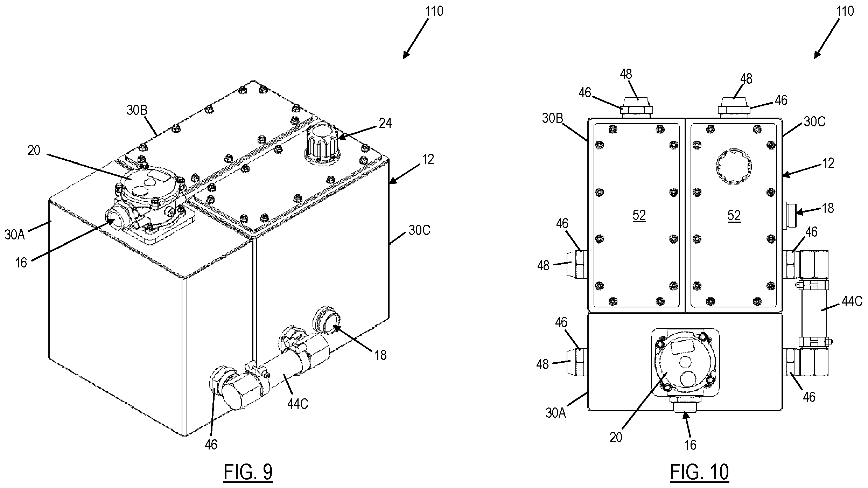

Figures 7 and 8 show tank 110 in a full, or maximum, capacity configuration in which all of the fluid chambers 30A, 30B, 30C are included in the fluid flow path. In this configuration, conduit 44C is removed and the respective ports 46 are closed (by caps 48 in this example) and the conduits 44A, 44B are installed to create a fluid flow path from the fluid inlet 16 through the inlet fluid chamber 30A into the intermediate fluid chamber 30B via conduit 44A, and from the intermediate fluid chamber 30B into the outlet fluid chamber 30C via conduit 44B and so to the fluid outlet 18. Accordingly, in use all of the chambers 30A, 30B, 30C may be filled with hydraulic fluid, which maximizes the capacity of the reservoir 14. In contrast, Figures 9 and 10 show tank 110 in a reduced capacity configuration in which only the inlet and outlet fluid chambers 30A, 30C are included in the fluid flow path. In this configuration, conduit 44C is installed to create a fluid flow path from the fluid inlet 16 through the inlet fluid chamber 30A into the outlet fluid chamber 30C via conduit 44C and so to the fluid outlet 18. Conduits 44B and 44C are removed and the respective ports 46 are closed (by caps 48 in this example) to prevent fluid from flowing into the intermediate fluid chamber 30B from either of the other chambers 30A, 30C. As such the intermediate fluid chamber 30B is isolated from the other fluid chambers 30A, 30C and is excluded from the fluid flow path. Accordingly, in use only chambers 30A and 30C may be filled with hydraulic fluid, which reduces the capacity of the reservoir 14 in comparison with the full capacity configuration.

Figure 11 shows tank 210 in a full, or maximum, capacity configuration in which all of the fluid chambers 30A, 30B, 30C are included in the fluid flow path. In this configuration, aperture 40A is closed by conduit 44 which directs fluid into the intermediate fluid chamber 30B from the inlet chamber 30A, and the aperture 40C is open to create a fluid flow path from the fluid inlet 16 through the inlet fluid chamber 30A into the intermediate fluid chamber 30B via conduit 44, and from the intermediate fluid chamber 30B into the outlet fluid chamber 30C via aperture 40C and so to the fluid outlet 18. Accordingly, in use all of the chambers 30A, 30B, 30C may be filled with hydraulic fluid, which maximizes the capacity of the reservoir 14. In contrast, Figure 12 shows tank 210 in a reduced capacity configuration in which only the inlet and outlet fluid chambers 30A, 30C are included in the fluid flow path. In this configuration, aperture 40A is open (by removing conduit 44) to create a fluid flow path from the fluid inlet 16 through the inlet fluid chamber 30A into the outlet fluid chamber 30C via aperture 40A and so to the fluid outlet 18. Apertures 40B and 40C are closed (by a respective cover 50) to prevent fluid from flowing into the intermediate fluid chamber 30B from the outlet chamber 30C. As such the intermediate fluid chamber 30B is isolated from the other fluid chambers 30A, 30C and is excluded from the fluid flow path. Accordingly, in use only chambers 30A and 30C may be filled with hydraulic fluid, which reduces the capacity of the reservoir 14 in comparison with the full capacity configuration.

Figure 13 shows tank 310 in a full, or maximum, capacity configuration in which all of the fluid chambers 30A, 30B, 30C are included in the fluid flow path. In this configuration, conduit 44C is removed and the respective ports 46 are closed (e.g. by caps (not shown)) and the conduits 44A, 44B are installed to create a fluid flow path from the fluid inlet 16 through the inlet fluid chamber 30A into the intermediate fluid chamber 30B via conduit 44A, and from the intermediate fluid chamber 30B into the outlet fluid chamber 30C via conduit 44B and so to the fluid outlet 18. Accordingly, in use all of the chambers 30A, 30B, 30C may be filled with hydraulic fluid, which maximizes the capacity of the reservoir 14. In contrast, Figure 14 shows tank 310 in a reduced capacity configuration in which only the inlet and outlet fluid chambers 30A, 30C are included in the fluid flow path. In this configuration, conduit 44C is installed to create a fluid flow path from the fluid inlet 16 through the inlet fluid chamber 30A into the outlet fluid chamber 30C via conduit 44C and so to the fluid outlet 18. Conduits 44B and 44C are removed and the respective ports 46 are closed (e.g. by caps (not shown)) to prevent fluid from flowing into the intermediate fluid chamber 30B from either of the other chambers 30A, 30C. As such the intermediate fluid chamber 30B is isolated from the other fluid chambers 30A, 30C and is excluded from the fluid flow path. Accordingly, in use only chambers 30A and 30C may be filled with hydraulic fluid, which reduces the capacity of the reservoir 14 in comparison with the full capacity configuration.

In the full capacity configuration, the fluid reservoir 14 is capable of holding a higher volume of hydraulic fluid (typically hydraulic oil) than it is capable of holding in the reduced capacity configuration. More generally, the tank 10, 110, 210, 310 is configurable between at least two different configurations in which a respective different number of fluid chambers 30 are included in the fluid flow path thereby adjusting the fluid capacity of the reservoir 14, and so adjusting the volume of fluid that the reservoir 40 is capable of holding. The tank 10, 110, 210 may be configured between different configurations by selectively including or excluding one or more of the fluid chambers 30 from the fluid flow path. The fluid capacity may be increased by adding one or more fluid chamber 30 to the flow path, or may be reduced by excluding, or isolating, one or more fluid chamber 30 from the flow path.

Advantageously, tanks 10, 110, 210, 310 have an external shape, size and configuration that is suitable for incorporation into different types of hydraulic system, or different types of machine that include a hydraulic system (e.g. screening machines or other material processing machines such as crushers, washers, separators and so on), but are configurable to adjust the internal volume of the fluid reservoir to suit the hydraulic requirements of the system/machine.

In preferred embodiments, the tank 10, 110, 210, 310 has fixed external proportions and volume (or having fixed external shape, size and/or configuration, particularly the tank body 12), and is configurable to change the internal volume of the tank 10, 110, 210, 310 (and more particularly of the reservoir 14), thereby allowing the tank to be adapted for use with machines (or more generally hydraulic systems, or machines with hydraulic systems) with different flow demands, and to allow the tank to be filled with an amount of hydraulic fluid (typically hydraulic oil) that is suited to the required flow demand. Advantageously, the tank's ancillary components (e.g. filter(s), strainer(s), filler cap(s), breather(s), access hatch(es) and/or external connector(s) (as applicable)) remain fully functional regardless of the internal configuration of the tank. Advantageously, irrespective of the internal configuration of the tank, the tank maintains its functions as a reservoir to hold the oil for sufficient time to allow air to be released from the oil, for solid particles to settle to the bottom of the tank or to be captured either by the return filter or the suction strainer, to dissipate heat allow for expansion of oil within the system and to store the oil.

Optionally, one or more inflatable bladder (not shown), and/or other object (not shown), which may be of fixed size, may be removably located in the reservoir 14, e.g. in one or more of the fluid chambers 30, in order to reduce the internal volume, or capacity, of the reservoir 14 (by acting as a void filler).

The invention is not limited to the embodiment(s) described herein but can be amended or modified without departing from the scope of the present invention.

## Claims

1. A hydraulic tank comprising:
a tank body providing an internal fluid reservoir;
a fluid inlet to the reservoir; and
a fluid outlet from the reservoir,
wherein the tank body provides a fluid flow path from the fluid inlet to the fluid outlet through the reservoir,
and wherein the tank body comprises a plurality of fluid chambers for providing the fluid reservoir, the tank being configurable to selectively include or exclude at least one of the fluid chambers from the fluid flow path.

2. The hydraulic tank of claim 1, wherein the fluid chambers are defined by one or more internal chamber walls within the tank body, the chamber walls being rigid, substantially rigid or semi-rigid, and/or wherein each fluid chamber, or at least one of the fluid chambers, is provided by a respective chamber module, preferably comprising a respective individual container or receptacle, wherein respective chamber modules may be connected together to form the tank body.

3. The hydraulic tank of any preceding claim, further including respective fluid communication means for providing fluid communication between each fluid chamber and at least one other of the fluid chambers, and wherein the respective fluid communication means for at least one of, and optionally all of, said fluid chambers is configurable to allow or to prevent fluid communication between the respective fluid chambers, and wherein at least one of, and optionally all of, said fluid communication means may be located inside the tank body, and preferably comprises at least one aperture formed in at least one chamber wall, and/or comprises a conduit configured to direct fluid between the respective chambers, and/or wherein at least one of, and optionally all of, said fluid communication means may be located outside the tank body, and preferably comprises a conduit, for example a hose or pipe, configured to direct fluid between the respective chambers.

4. The hydraulic tank of any preceding claim, wherein in at least one configuration, the fluid flow path is provided by a plurality of the fluid chambers that are in fluid communication with each other such that, in use, hydraulic fluid is able to enter the tank via the fluid inlet and flow through the plurality of fluid chambers that are in fluid communication with each other to the fluid outlet, and wherein the configuration is preferably such that the fluid flow path passes through the fluid chambers in sequence from the fluid inlet to the fluid outlet, preferably passing through each fluid chamber only once.

5. The hydraulic tank of any preceding claim, wherein the tank is configurable to exclude one or more of the fluid chambers from the fluid flow path by isolating the, or each, excluded fluid chamber from the, or each, other fluid chamber that is included in the fluid flow path such that fluid cannot flow into or out of the, or each, excluded fluid chamber from or to the, or each, other fluid chamber included in the fluid flow path.

6. The hydraulic tank of claim 5 when dependent on claim 3, wherein the, or each, excluded fluid chamber is isolated by means for disabling, preferably reversibly disabling, the respective fluid communication means between the excluded fluid chamber and the, or each, other fluid chamber with which it is otherwise connected by the respective fluid communication means, and wherein, preferably, the respective fluid communication means comprises at least one aperture and/or at least one conduit, and wherein the disabling means comprises means for closing or blocking the respective at least one aperture and/or the respective at least one conduit, and wherein the closing or blocking means may for example comprise any one or more of a cover, a plate, a cap, and a valve, and wherein, optionally, the respective fluid communication means comprises at least one conduit connected to, preferably removably connected to, a respective fluid port of each respective fluid chamber, and wherein the disabling means comprises means for closing or blocking the respective fluid port, and wherein the closing or blocking means may for example comprise any one or more of a cover, a cap, and a valve.

7. The hydraulic tank of claim 5 or 6, wherein said isolation of the, or each, excluded fluid chamber is reversible such that the, or each, excluded fluid chamber may be included in the fluid flow path.

8. The hydraulic tank of claim 3 or any one of claims 4 to 7 when dependent on claim 3, wherein the respective fluid communication means comprises at least one conduit, and wherein said at least one conduit is removable.

9. The hydraulic tank of any preceding claim, wherein the tank body includes at least one maintenance hatch for providing access to the inside of said tank body, and wherein preferably, at least one respective maintenance hatch is provided for each fluid chamber.

10. The hydraulic tank of any preceding claim, wherein tank is configurable between a full capacity configuration in which all of the fluid chambers are included in the fluid flow path, and one or more reduced capacity configuration in which at least one of the fluid chambers is excluded from the fluid flow path, and/or wherein the tank is configurable between at least two different configurations in which a respective different number of fluid chambers are included in the fluid flow path thereby adjusting the fluid capacity of the reservoir, and wherein the tank may be configured between different configurations by selectively including or excluding one or more of the fluid chambers from the fluid flow path.

11. The hydraulic tank of any preceding claim, wherein the fluid chambers include an inlet fluid chamber associated with the fluid inlet, an outlet fluid chamber associated with the fluid outlet, and at least one intermediate fluid chamber, wherein the inlet fluid chamber and the outlet fluid chamber each forms a respective part of the fluid flow path, and wherein the tank is configurable to selectively include the or each intermediate chamber in the fluid flow path or to exclude the or each intermediate fluid chamber from the fluid flow path.

12. The hydraulic tank of any preceding claim, wherein the tank has a fixed external shape and/or size, and is configurable to adjust the fluid capacity of the reservoir by selectively including or excluding at least one of the fluid chambers from the fluid flow path.

13. The hydraulic tank of any preceding claim, wherein one or more inflatable bladder, and/or other object, which may be of fixed size and/or shape, is removably located in one or more of the fluid chambers.

14. The hydraulic tank of any preceding claim, wherein said at least one of the fluid chambers includes breathing means for allowing air to flow into and out of the respective fluid chamber, and wherein, typically, at least one other of the fluid chambers includes breathing means for allowing air to flow into and out of the respective fluid chamber.

15. A hydraulic system comprising a hydraulic tank as claimed in any preceding claim, wherein the hydraulic system typically comprises at least one hydraulically operated component to which the hydraulic tank is connected, typically as part of a hydraulic circuit.
